# EUROPEAN PATENT SPECIFICATION

(11) **EP 1 210 708 B1**
(45) Date of publication and mention of the grant of the patent: **18.07.2012**
(21) Application number: 00950863.1
(22) Date of filing: 28.07.2000
(51) Int. Cl.: G09G 5/28

(54) **RENDERING SUB-PIXEL PRECISION CHARACTERS HAVING WIDTHS COMPATIBLE WITH PIXEL PRECISION CHARACTERS**
SCHRIFTZEICHENWIEDERGABE MIT SUBPIXELPRÄZISION UND AN PIXELPRÄZISIONSZEICHEN ANGEPASSTE ZEICHENBREITE
RENDU DE CARACTERES A PRECISION DE SOUS-PIXEL DONT LES LARGEURS SONT COMPATIBLES AVEC DES CARACTERES A PRECISION DE PIXEL

(30) Priority: 30.07.1999 US 364364; 10.04.2000 US 546062
(43) Date of publication of application: 05.06.2002
(73) Proprietor: MICROSOFT CORPORATION, Redmond, WA 98052 (US)
(72) Inventor: HITCHCOCK, Gregory, C., Woodinville, WA 98072-9236 (US); STAMM, Beat, Redmond, WA 98073 (US); BETRISEY, Claude, Redmond, WA 98052 (US); CONWAY, Matt, Seattle, WA 98107 (US)
(74) Representative: Grünecker, Kinkeldey, Stockmair & Schwanhäusser
(86) International application number: PCT/US2000/020655
(87) International publication number: WO 2001/009873

(56) References cited:
- EP-A- 0 346 621
- EP-A- 0 435 391
- EP-A- 0 772 144
- WO-A-00/67196
- US-A- 5 684 510
- US-A- 5 710 880
- US-A- 5 910 805
- BEAT STAMM: "Object-orientation and extensibility in a font-scaler" ELECTRONIC PUBLISHING, vol. 6, no. 3, September 1993 (1993-09), pages 159-170, XP002530322

## Description

The present invention relates to rendering images on display devices having pixels with separately controllable pixel sub-components. More specifically, the present invention relates to rendering characters on display devices using pixel sub-component precision, while preserving the same advance width of the characters that would be obtained by rendering the characters using full pixel precision processes.

With the advent of the information age, individuals worldwide spend substantial amounts of time viewing display devices. Flat panel display devices, such as liquid crystal display (LCD) devices, and cathode ray tube (CRT) display devices are two of the most common types of display devices used to render text and graphics. CRT display devices use scanning electron beams that are controlled in an analog manner to activate phosphor positioned on a screen. A pixel of a CRT display device that has been illuminated by the electron beams consists of a triad of dots, each of a different color. The dots included in a pixel are controlled together to generate what is perceived by the user as a single point or region of light having a selected color defined by a particular hue, saturation, and intensity. The individual dots in a pixel of a CRT display device are not separately controllable. CRT display devices have been widely used in combination with desktop personal computers, workstations, and in other computing environments in which portability is not an important consideration.

LCD display devices, in contrast, have pixels consisting of multiple separately controllable pixel sub-components. Typical LCD devices have pixels with three pixel sub-components, which usually have the colors red, green, and blue. Each pixel sub-component of the pixels of an LCD device is a discrete light emitting device that can be individually controlled using analog or digital processes, depending on the nature of the LCD device. LCD devices have become widely used in portable or laptop computers due to their size, weight, and relatively low power requirements. Over the years, however, LCD devices have begun to be more common in other computing environments, and have become more widely used with non-portable personal computers.

Conventional image data and image rendering processes were developed and optimized to display images on CRT display devices. The smallest unit on a CRT display device that is separately controllable is a pixel; the three dots included in each pixel are controlled together to generate the desired color. Conventional image processing techniques map samples of image data to entire pixels, with the three dots included in the pixel together representing a single portion of the image. In other words, each pixel of a CRT display device corresponds to or represents a single region of the image data.

The image data and image rendering processes used with LCD devices are those that have been originally developed in view of the CRT, three-dot pixel model. Thus, conventional image rendering processes used with LCD devices do not take advantage of the separately controllable nature of pixel sub-components of LCD pixels, but instead generate together the luminous intensity values to be applied to the three pixel sub-components in order to yield the desired color. Using these conventional processes, each three-part pixel represents a single region of the image data.

It has been observed that the eyestrain and other reading difficulties that have been frequently experienced by computer users diminish as the resolution of display devices and the characters displayed thereon improve. The problem of poor resolution is particularly evident in flat panel display devices, such as LCDs, which may have resolutions 72 or 96 dots (i.e., pixels) per inch (dpi), which is lower than most CRT display devices. Such display resolutions are far lower than the 600 dpi resolution supported by most printers. Even higher resolutions are found in most commercially printed text such as books and magazines. The relatively few pixels in LCD devices are not enough to draw smooth character shapes, especially at common text sizes of 10, 12, and 14 point type. At such common text rendering sizes, portions of the text appear more prominent and coarse on the display device than when displayed on CRT display devices or printed.

In view of the foregoing problems experienced in the art, there is a need for techniques of improving the resolution of images displayed on LCD display devices. Because any such improved rendering process would be likely to be used to display electronic documents that were originally created with legacy rendering processes, it would be important to maintain the formatting and overall document size when such existing electronic documents are displayed.

WO 00/67196 A, published on November 9, 2000, concerns a method for improving the resolution of text rendered on a display device having sub-pixel elements. Hinting is performed by grid fitting which involves distorting character outlines so that the character better conforms to the shape of the grid. In grid placement, sub-pixel element boundaries are used to align the outline of the character.

US-A-5 910 805 concerns a method for the creation of an image font file that contains compressed bitmap representations of the characters of one or more fonts. The individual characters of the image font file are accessed, and while remaining in a compressed format, are selectively shifted in accordance with typesetting specification error values.

EP-A-0 772 144 concerns a method for creating anti-aliased characters, comprising creating an initial bitmap of the character at the resolution of a high resolution grid, and aligning stems of the bitmap with a coarse grid corresponding to the resolution of the output device, in order to provide balanced stems.

EP-A- 0 346 621 concerns a method for displaying multi-color image comprising displaying a first sub-pixel with an intensity which is a function of the intensities of at least two first image sub-pixels having positions extending over a first region. The first region has an area greater than the area of the display pixel, and is centered on the position of the display pixel.

EP-A-0 435 391 concerns a color display apparatus capable of displaying patterns, such as characters, by using stored color information of characters to be displayed in three planes.

BEAT STAMM: "Object-orientation and extensibility in a font-scaler" ELECTRONIC PUBLISHING, vol. 6, no. 3, September 1993 (1993-09), pages 159-170, XP002530322 concerns a font scaler that is used for producing bitmapped fonts from a generic font representation.

It is the object of the present invention to provide an improved method for displaying a character on a display device, as well as a corresponding system and computer-readable medium.

This object is solved by the subject matter of the independent claims.

Preferred embodiments are defined by the dependent claims.

The invention can be used in a variety of computing and software environments to yield displayed characters and other images having improved resolution. For instance, the preservation of compatible advance widths can have significant benefits when used with electronic documents that are originally generated or are later displayed in connection with conventional full pixel precision rendering processes. Because the rendering processes of the invention result in compatible advance widths, documents generated or displayed according to the invention typically have the same general formatting if they are also displayed or generated using conventional rendering processes. Thus, the invention provides desirable interoperability between the sub-pixel precision rendering processes disclosed herein and conventional rendering processes.

Additional advantages of the invention will become apparent from the description which follows, or may be learned by the practice of the invention. The features and advantages of the invention may be realized and obtained by means of the instruments and combinations pointed out in the appended claims. These and other features of the present invention will become more fully apparent from the appended claims.

### BRIEF DESCRIPTION OF THE DRAWINGS

In order that the manner in which the above-recited and other advantages and features of the invention are obtained, a more particular description of the invention briefly described above will be rendered by reference to specific embodiments thereof which are illustrated in the appended drawings. Understanding that these drawing depict only typical embodiments of the invention and are not therefore to be considered to be limiting of its scope, the invention will be described and explained with additional specificity and detail through the use of the accompanying drawings in which:
Figure 1A illustrates an exemplary system that provides a suitable operating environment for the present invention;
Figure 1B illustrates a portable computer having an LCD display on which characters can be displayed according to the invention.
Figures 2A and 2B depict a portion of an LCD display and show the separately controllable pixel sub-components of the pixels of the LCD display.
Figure 3 illustrates a text character as stored electronically and displayed on a display device to present the concepts of advance width and other characteristics of the character.
Figure 4 depicts a document having been generated in association with a full pixel precision rendering process.
Figure 5 illustrates the document of Figure 4 having been displayed on a display device using a sub-pixel precision rendering process of the invention, but without the compatible advance widths of the invention.
Figure 6 illustrates the document of Figure 4 having been displayed on the display device using a sub-pixel precision rendering process of the invention and resulting in compatible advance widths according to the invention.
Figure 7 is a high level block diagram illustrating selected functional modules whereby a sub-pixel precision rendering process can be performed according to one embodiment of the invention.
Figure 8 illustrates a scaling operation by which image data is scaled as part of the sub-pixel precision rendering process of Figure 7.
Figure 9 illustrates the scaled image data of Figure 8 having been superimposed over a grid corresponding to the pixels of a display device prior to the hinting operation of Figure 7 being conducted.
Figure 10 depicts the scaled image data of Figure 9 after the hinting operation has been conducted.
Figure 11A is a high level flow diagram showing selected steps of one example of the hinting operations of the invention.
Figure 11B is a flow diagram illustrating selected steps of one embodiment of the hinting operations of the invention.
Figure 12 illustrates a portion of the hinted image data of Figure 10 being subjected to the scan conversion operation of Figure 7.
Figure 13 illustrates the results of a hinting operation conducted on the image data of Figure 8 that does not yield the compatible advance widths of the invention.

### DETAILED DESCRIPTION OF THE INVENTION

The present invention relates to image data processing and image rendering techniques whereby selected portions of characters can be displayed on a display device with sub-pixel precision, while the advance width of the characters can be made equal to the advance width of the characters that would be generated using full pixel precision rendering techniques. The basic image rendering process includes a hinting operation, and a scan conversion operation. These operations together result in spatially different sets of one or more samples of selected portions of the image data being mapped to individual pixel sub-components of the pixels of a flat panel display device. Accordingly, at least a portion of the image is rendered on the display device with pixel sub-component precision, and each pixel sub-component of at least some of the pixels represents a different region of the image.

The invention is described herein primarily in the context of rendering text characters, although the invention and the general principles disclosed herein extend to processes of rendering other images. The image rendering processes are adapted for use with LCD devices or other display devices that have pixels with multiple separately controllable pixel sub-components. Although the invention is described herein primarily in reference to LCD devices, the invention can also be practiced with other display devices having pixels with multiple separately controllable pixel sub-components.

When, for example, a character having a stem is displayed according to one embodiment of the invention, the advance width is selected to have a value that is an integer multiple of the width of the pixels of the LCD device. In this manner, the character that is displayed on the display device has an advance width that is the same as the advance width that would have been generated had the character been displayed using a conventional rendering process that uses only full pixel precision. The stem, however, is processed and rendered so as to have width that has pixel sub-component precision, thereby improving the resolution of the character compared to conventional image rendering techniques.

### Exemplary Computing Environments

The embodiments of the present invention may comprise a special purpose or general purpose computer including various computer hardware, as discussed in greater detail below. Embodiments within the scope of the present invention also include computer-readable media for carrying or having computer-executable instructions or data structures stored thereon. Such computer-readable media can be any available media which can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such a connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

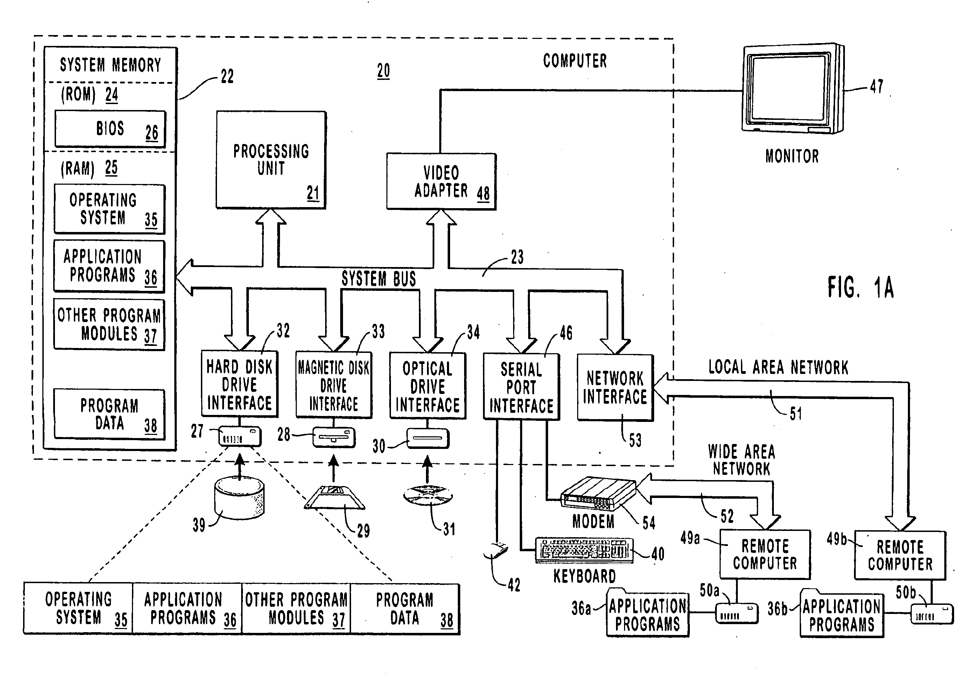

Figure 1A and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represent examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

With reference to Figure 1A, an exemplary system for implementing the invention includes a general purpose computing device in the form of a conventional computer 20, including a processing unit 21, a system memory 22, and a system bus 23 that couples various system components including the system memory 22 to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help transfer information between elements within the computer 20, such as during start-up, may be stored in ROM 24.

The computer 20 may also include a magnetic hard disk drive 27 for reading from and writing to a magnetic hard disk 39, a magnetic disk drive 28 for reading from or writing to a removable magnetic disk 29, and an optical disk drive 30 for reading from or writing to removable optical disk 31 such as a CD-ROM or other optical media. The magnetic hard disk drive 27, magnetic disk drive 28, and optical disk drive 30 are connected to the system bus 23 by a hard disk drive interface 32, a magnetic disk drive-interface 33, and an optical drive interface 34, respectively. The drives and their associated computer-readable media provide nonvolatile storage of computer-executable instructions, data structures, program modules and other data for the computer 20. Although the exemplary environment described herein employs a magnetic hard disk 39, a removable magnetic disk 29 and a removable optical disk 31, other types of computer readable media for storing data can be used, including magnetic cassettes, flash memory cards, digital video disks, Bernoulli cartridges, RAMs, ROMs, and the like.

Program code means comprising one or more program modules may be stored on the hard disk 39, magnetic disk 29, optical disk 31, ROM 24 or RAM 25, including an operating system 35, one or more application programs 36, other program modules 37, and program data 38. A user may enter commands and information into the computer 20 through keyboard 40, pointing device 42, or other input devices (not shown), such as a microphone, joy stick, game pad, satellite dish, scanner, or the like. These and other input devices are often connected to the processing unit 21 through a serial port interface 46 coupled to system bus 23. Alternatively, the input devices may be connected by other interfaces, such as a parallel port, a game port or a universal serial bus (USB). An LCD device 47 is also connected to system bus 23 via an interface, such as video adapter 48. In addition to the LCD device, personal computers typically include other peripheral output devices (not shown), such as speakers and printers.

The computer 20 may operate in a networked environment using logical connections to one or more remote computers, such as remote computers 49a and 49b. Remote computers 49a and 49b may each be another personal computer, a server, a router, a network PC, a peer device or other common network node, and typically includes many or all of the elements described above relative to the computer 20, although only memory storage devices 50a and 50b and their associated application programs 36a and 36b have been illustrated in Figure 1A. The logical connections depicted in Figure 1A include a local area network (LAN) 51 and a wide area network (WAN) 52 that are presented here by way of example and not limitation. Such networking environments are commonplace in office-wide or enterprise-wide computer networks, intranets and the Internet.

When used in a LAN networking environment, the computer 20 is connected to the local network 51 through a network interface or adapter 53. When used in a WAN networking environment, the computer 20 may include a modem 54, a wireless link, or other means for establishing communications over the wide area network 52, such as the Internet. The modem 54, which may be internal or external, is connected to the system bus 23 via the serial port interface 46. In a networked environment, program modules depicted relative to the computer 20, or portions thereof, may be stored in the remote memory storage device. It will be appreciated that the network connections shown are exemplary and other means of establishing communications over wide area network 52 may be used.

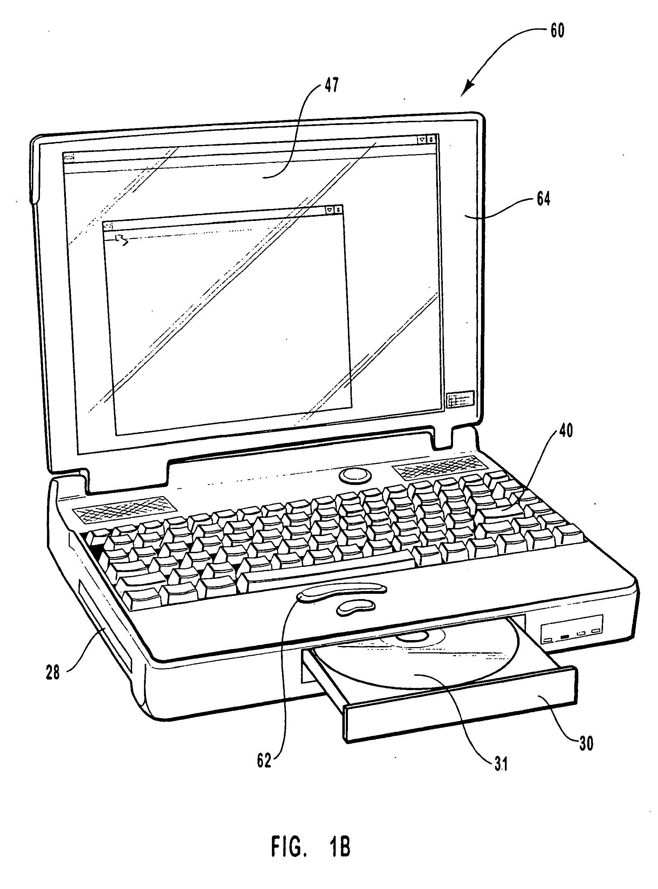

As explained above, the present invention may be practiced in computing environments that include many types of computer system configurations, such as personal computers, hand-held devices, multi-processor systems, microprocessor-based or programmable consumer electronics, network PCs, minicomputers, mainframe computers, and the like. One such exemplary computer system configuration is illustrated in Figure 1B as portable computer 60, which includes magnetic disk drive 28, optical disk drive 30 and corresponding removable optical disk 31, keyboard 40, monitor 47, pointing device 62 and housing 64. Computer 60 may have many of the same components as those depicted in Figure 1B.

Portable personal computers, such as portable computer 60, tend to use flat panel display devices for displaying image data, as illustrated in Figure 1B by monitor 47. One example of a flat panel display device is a liquid crystal display (LCD). Flat panel display devices tend to be small and lightweight as compared to other display devices, such as cathode ray tube (CRT) displays. In addition, flat panel display devices tend to consume less power than comparable sized CRT displays making them better suited for battery powered applications. Thus, flat panel display devices are becoming ever more popular. As their quality continues to increase and their cost continues to decrease, flat panel displays are also beginning to replace CRT displays in desktop applications.

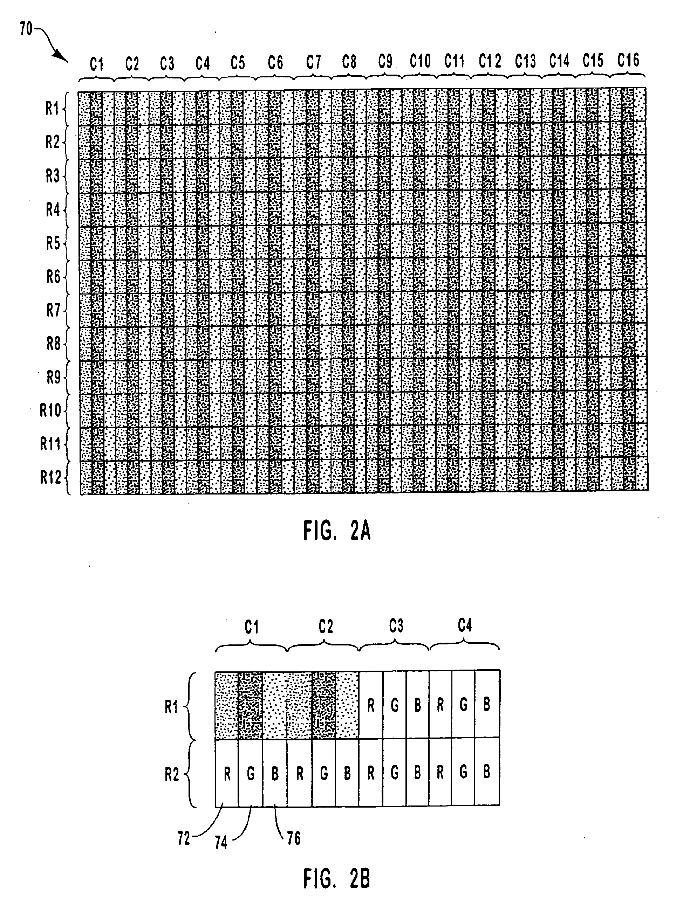

Figures 2A and 2B illustrate physical characteristics of an exemplary LCD display device. The portion of LCD 70 depicted in Figure 2A includes a plurality of rows R1-R12 and a plurality of columns C1-C16. Color LCDs utilize multiple distinctly addressable elements and sub-elements, herein referred to as pixels and pixel sub-components, respectively. Figure 2B, which illustrates in greater detail the upper left hand portion of LCD 70, demonstrates the relationship between the pixels and pixel sub-components.

Each pixel includes three pixel sub-components, illustrated, respectively, as red (R) sub-component 72, green (G) sub-component 74 and blue (B) sub-component 76. The pixel sub-components are non-square and are arranged on LCD 70 to form vertical stripes of same-colored pixel sub-components. The RGB stripes normally run the entire width or height of the display in one direction. Common LCD display devices currently used with most portable computers are wider than they are tall, and tend to have RGB stripes running in the vertical direction, as illustrated by LCD 70. Examples of such devices that are wider than they are tall have column-to-row ratios such as 640 x 480, 800 x 600, or 1024 x 768. LCD display devices are also manufactured with pixel sub-components arranged in other patterns, including horizontal stripes of same-colored pixel sub-components, zigzag patterns or delta patterns. Moreover, some LCD display devices have pixels with a plurality of pixel sub-components other than three pixel sub-components. The present invention can be used with any such LCD display device or flat panel display device so long as the pixels of the display device have separately controllable pixel sub-components.

A set of RGB pixel sub-components constitutes a pixel. Thus, as used herein, the term "pixel sub-component" refers to one of the plurality of separately controllable elements that are included in a pixel. Referring to Figure 2B, the set of pixel sub-components 72, 74, and 76 forms a single pixel. In other words, the intersection of a row and column, such as the intersection of row R2 and column C1, represents one pixel, namely (R2, C1). Moreover, each pixel sub-component 72, 74 and 76 is one-third, or approximately one-third, the width of a pixel while being equal, or approximately equal, in height to the height of a pixel. Thus, the three pixel sub-components 72, 74 and 76 combine to form a single substantially square pixel. This pixel/sub-component relationship can be utilized for rendering text images on a display device, as will be further explained below.

### Image Data Processing and Image Rendering Operations

The image rendering processes of the invention result in at least a portion of the image being displayed with pixel sub-component precision as opposed to full pixel precision. As used herein, the terms "pixel sub-component precision" and "sub-pixel precision" are interchangeable and refer to a feature of an image being displayed in a process whereby individual pixel sub-components represent different regions of an image rather than the entire pixel representing a single region of the image. An image rendering process having pixel sub-component precision can result in edges of a character being positioned at boundaries between pixel sub-components, regardless of whether the pixel sub-component boundaries are also boundaries between full pixels. Moreover, an image rendering process having pixel sub-component precision generates luminous intensity values of pixel sub-components independently of the luminous intensity values associated with other pixel sub-components in the same pixel. In other words, a luminous intensity value obtained in image rendering processes having pixel sub-component precision is not generated to create a specific color of the full pixel, but is instead generated based on one or more samples of the image data mapped to the particular pixel sub-component.

An image rendering process that has "full pixel precision", when applied to LCD display devices, results in entire pixels representing single regions of an image rather than the sub-components representing different regions of the image. In full pixel precision processes, edges of characters are positioned at boundaries between full pixels rather than at boundaries between pixel sub-components. Examples of image rendering processes using full pixel precision include conventional processes originally developed for CRT display devices, which do not take advantage of the separately controllable nature of pixel sub-components of LCD display devices when applied to LCD display devices.

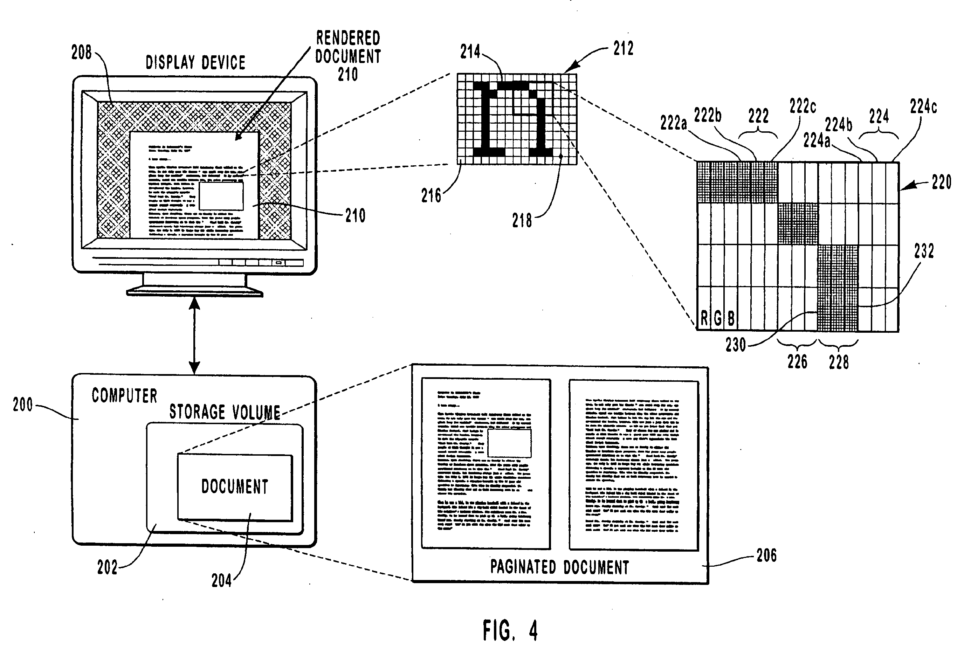

Figure 4 illustrates a text character 114 as stored electronically and displayed on a display device. The electronically stored character is shown generally at 156, while the displayed character is shown generally at 158. The term "advance width" refers to the width, either actual or displayed, of a character. The advance width typically extends between a left side bearing point 116 and a right side bearing point 118 that define the left and right extent of the region of the display device that is associated with the character. Assuming that character 114 has a black foreground, or black character body 140, and a white background 142, the advance width 144 generally includes a portion associated with the width 146 of the black character body and portions associated with the left bearing 148 and the right bearing 150. The left bearing 148 is the distance between the left side bearing point 116 and the left edge 152 of the black character body 140, while the right bearing 150 is the distance between the right edge 154 of the black character body 140 and the right side bearing point 118.

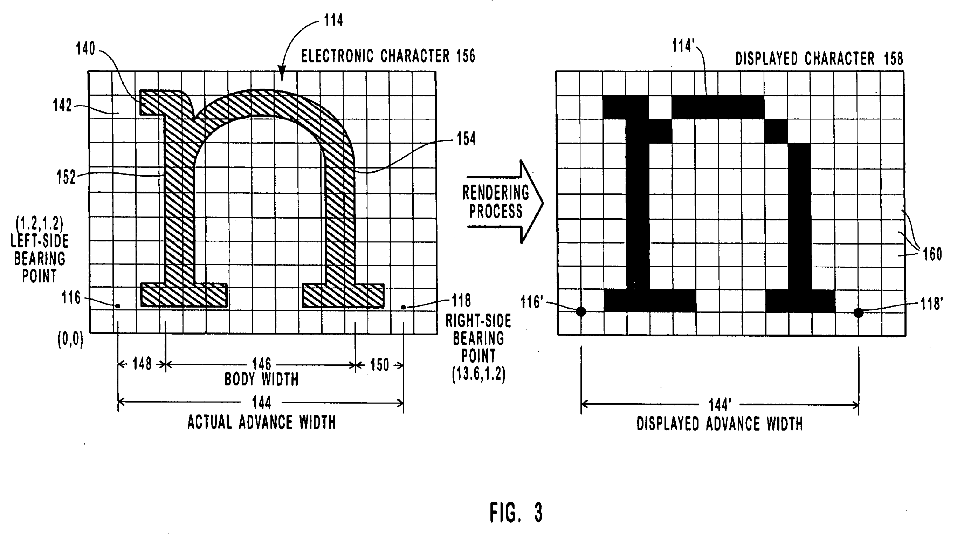

The "actual advance width" of a character is the advance width that would be displayed if the character could be displayed with perfect precision and corresponds to the advance width of the character as stored electronically. The actual advance width is defined by left side bearing point 116 and right side bearing point 118 as they are stored in a memory or storage device as shown in Figure 3 at 156. Regardless of the precision of the rendering process, bearing points 116 and 118 may be stored with any desired degree of precision, with a fractional component with respect to the width of the full pixels. For instance, left side bearing point 116 has a coordinate position of (1.2, 1.2) and right side bearing point 118 has a coordinate position (of 13.6, 1.2) when character 114 is stored electronically at 156 with a specified font size. Accordingly, character 114 has an actual advance width of 12.4 pixels.

The "displayed advance width" of the character is the advance width of the displayed character 114' shown generally at 158. Generating a displayed advance width 144' may involve adjusting the actual advance width 144 by, for example, repositioning the left side bearing point 116 to a full pixel boundary, and rounding the actual advance width to an integer multiple of the width of pixels 160. In Figure 4, the repositioned left side and right side bearing points are illustrated at 116' and 118', respectively. In this example, using conventional full pixel precision rendering processes, the actual advance width 144 of 12.4 pixels becomes a displayed advance width 144' of 12.0 pixels. As used herein, the term "coarse advance width" is a displayed advance width 144' that is generated using a full pixel precision rendering process and has a value that is an integer multiple of the width of the pixels 160.

The term "compatible advance width" shall refer to a displayed advance width that is (i) generated using an image rendering process in which at least one of the features of the character is displayed with sub-pixel precision and (ii) has a value that is equal to the displayed advance width of the character if the character were to be displayed using a rendering process having only full pixel precision. Generating "compatible advance widths" results in documents having the same length when the document is displayed using the sub-pixel and full pixel precision rendering processes.

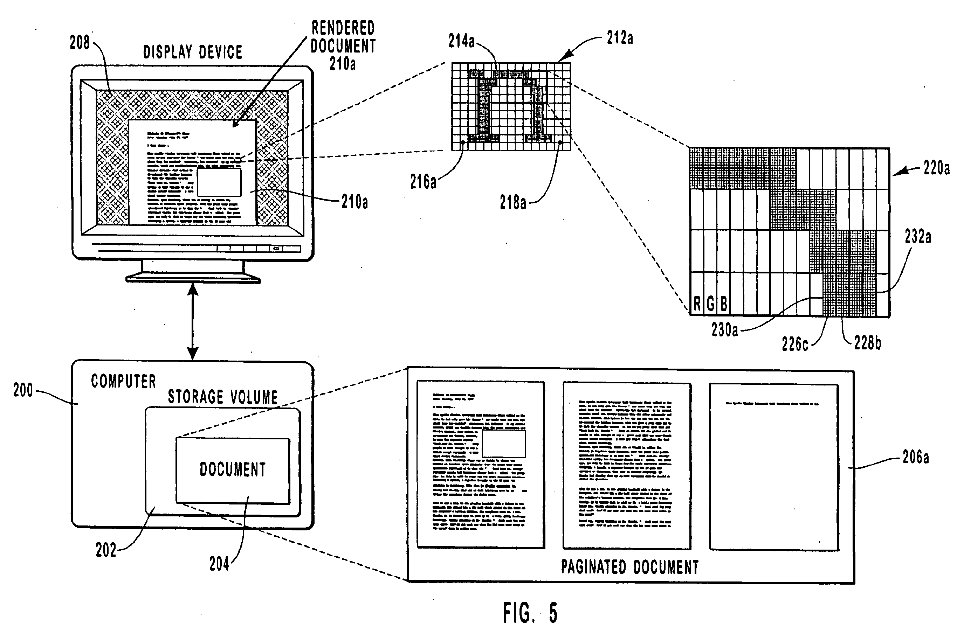

Figures 4-6 depict a document being displayed on an LCD display device using image rendering processes having full pixel and pixel sub-component precision. Figure 4 illustrates a computer 200 having a storage volume 202 in which an electronic document 204 is stored. Figure 4 represents one example of image data that has been generated using legacy image rendering processes, and is presented in order to illustrate one of the various sources of image data that can be displayed using the image rendering processes of the invention. Figure 5, which will be described in greater detail below, shows document 204 of Figure 4 being displayed using an image rendering process that has pixel sub-component precision. Although the image rendering process of Figure 4 utilizes the pixel sub-component precision of the invention, it does not generate compatible advance widths. Thus, the process of Figure 4 results in the potential loss of the original formatting of document 204.

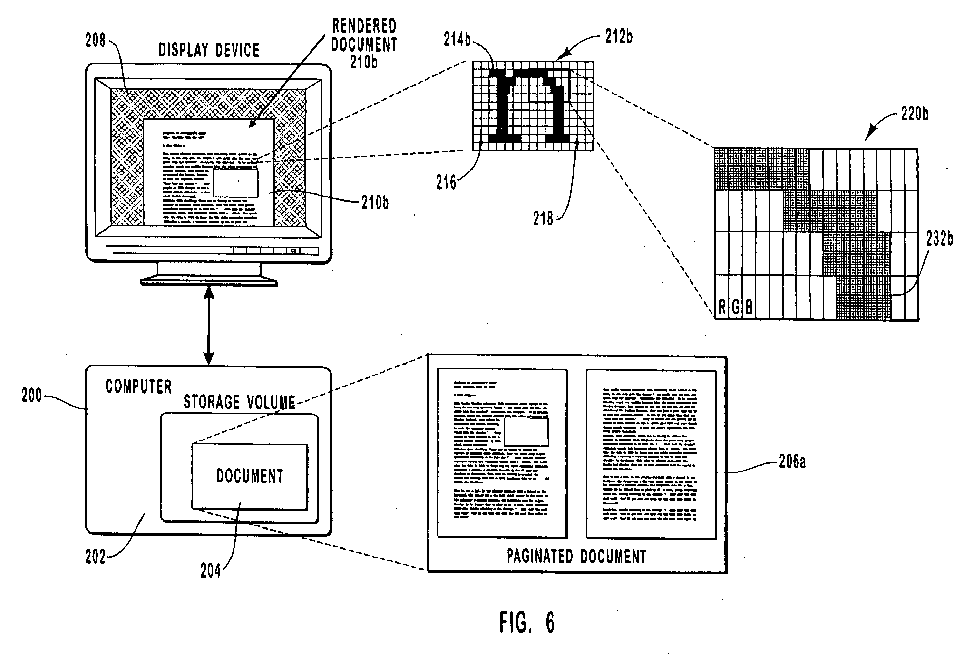

In contrast to the image rendering process of Figure 5, the process of Figure 6 exhibits both the pixel sub-component precision of the invention and the compatible advance widths of the invention. Accordingly, the formatting, particularly the length, of a document generated using the conventional rendering process of Figure 4 will remain the same regardless of whether the document is displayed as shown in Figure 4 or in Figure 6. Similarly, a document generated using the inventive rendering process of Figure 6 will have the same formatting regardless of whether the document is displayed as shown in Figure 6 or Figure 4.

Referring now to Figure 4, computer 200 can be any general purpose or special purpose computer in which image rendering processes can be performed. Examples of a suitable computer 200 include, but are not limited to, computer 20 of Figure 1A and computer 60 of Figure 1B. The components of computer 200 can be similar to those illustrated in Figures 1A and 1B. For instance, storage volume 202 can be the magnetic hard disk 39, the magnetic disk 29, or the optical disk 31 of Figure 1A or any other storage device. Moreover, storage volume 202 can correspond to any memory device, such as ROM 24 or RAM 25 that is capable of storing an electronic document.

Electronic document 204 is any electronic document having characters or another image to be displayed on a display device. In this example, document 204 has been created with the assistance of a full pixel precision image rendering process, as will be discussed in greater detail hereinbelow. Document 204 has been formatted by a user to have a paginated representation 206 with a length of two pages. In other words, when document 204 is displayed on display device 208 using the full pixel precision process, the document has a length of two pages.

Figure 4 illustrates document 204 being displayed on display device 208 as rendered document 210 using a conventional, full pixel precision rendering process. In this example, it will be assumed that display device 208 is an LCD display device, although it can also be a CRT display device. Figure 4 illustrates a region 212 of display device 208 in greater detail to show the manner in which character "n" 214 is displayed with full pixel precision. Character 214 has a left side bearing point 216 and a right side bearing point 218 that have been mapped to full pixel boundaries, since Figure 4 represents a full pixel precision rendering process. Although left side bearing point 216 and right side bearing point 218 are not actually rendered on display device 108 as a visible point, they are illustrated in Figure 4 for purposes of describing the mechanics of displaying character 212 on display device 208.

Left side bearing point 216 and right side bearing point 218, which may be stored in electronic document 204 with fractional positional values, have been repositioned, or rounded, to the boundaries of full pixels, as will become evident in reference to Figures 4 and 5 below. The positioning of left side bearing point 216 and right side bearing point 218 on the full pixel boundaries results in character 214 having a displayed advance width having a value equal to the width of 12 full pixels. Because the rendering process of Figure 4 has full pixel precision, the displayed advance width is a "coarse" advance width. The cumulative effect of the repositioning of the bearing points of the individual characters to full pixel boundaries in document 204 yields the overall formatting and length of the document, which is depicted generally at paginated document 206.

Figure 4 also shows sub-region 220 of display device 208 to illustrate the full pixel precision of character 214 in greater detail. Sub-region 220 illustrates the red, green, and blue pixel sub-components of the pixels of display device 208. Because Figure 4 represents a full pixel precision rendering process, each pixel corresponds to a single portion of the displayed character. For example, pixel 222, consisting of red pixel sub-component 222a, green pixel sub-component 222b, and blue pixel sub-component 222c, represents a single portion of the image inside the outline of character 214. Accordingly, pixel sub-components 222a-c have been controlled together (i.e., completely turned off) to represent a single region of character 214. Similarly, pixel 224, consisting of red pixel sub-component 224a, green pixel sub-component 224b, and blue pixel sub-component 224c, represents a single portion of the image outside the outline of character 214. Thus, pixel sub-components 224a-c have been controlled together (i.e., completely turned on) to represent a single region of the image.

Because the rendering process of Figure 4 has full pixel precision, all features of character 214 have widths and heights that are integer multiples of the widths and heights of the pixels and have edges that fall on full pixel boundaries. For example, stem 232 of character 214 has a width that is equal to the width of one pixel and has a left edge 230 that falls on the full pixel boundary between pixel 226 and 228.

If display device 208 were instead a CRT display device, the individual pixels would consist of triads of phosphor dots rather than pixel sub-components, but the general principles described above in reference to Figure 4 would apply. Specifically, the displayed advance widths would have values that are integer multiples of the width of the pixels and each pixel would represent a single portion of the image.

Over the years, most electronic documents have been created and formatted in association with full pixel precision rendering processes, such as that illustrated in Figure 4. Although the invention can be used to render documents and images other than those originally generated using conventional full pixel precision techniques, many of the benefits and advantages of the invention will be described below in reference to Figure 6, which show the manner in which compatible advance widths can be maintained while using a sub-pixel precision rendering process to display electronic document 204 of Figure 4.

Prior to describing Figure 6, attention is directed to Figure 5, which depicts electronic document 204 being displayed using the sub-pixel precision rendering processes of the invention without generating the compatible advance widths of the invention. The sub-pixel precision rendering process of Figure 5 can generate high-resolution characters that are significantly more readable than the characters of conventional rendering processes, although it can result in incompatible advance widths and differences in document formatting compared to conventional techniques.

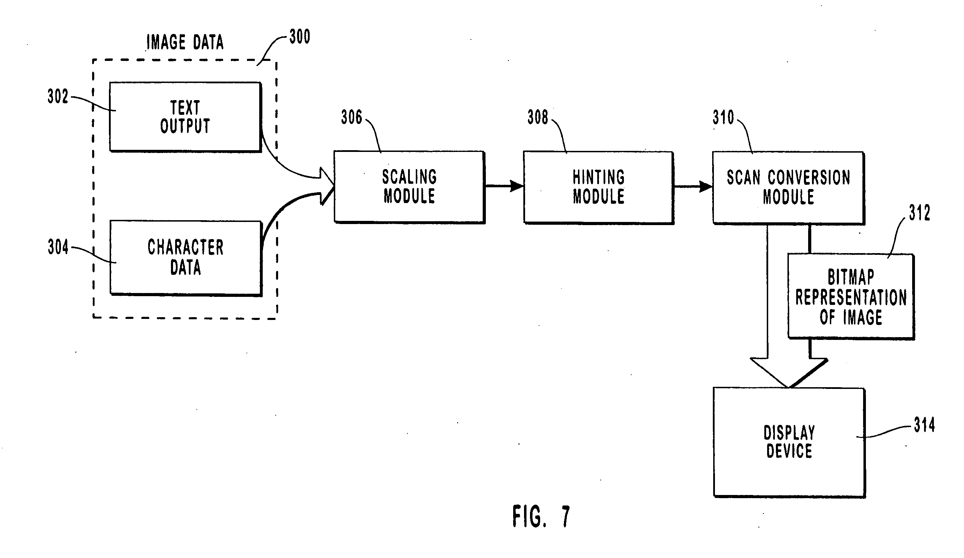

The display device 208 of Figure 5 is an LCD display device or other display device having separately controllable pixel subcomponents. Rendered document 210a has characters with at least some features being displayed with the sub-pixel precision. While Figure 5 illustrates the results of rendering characters with sub-pixel precision, the details of the image rendering processes of the invention are described in greater detail in reference to Figures 7-12 below. Region 212a and sub-region 220a of display device 208 of Figure 5 illustrate in greater detail the results of displaying character 214a with sub-pixel precision. For example, stems or other features of character 214a can have widths that are not integer multiples of the widths of full pixels. Stem 232a has a width equal to the width of four pixel sub-components or four-thirds of the width of a full pixel. Moreover, edges of character 214a can fall on any pixel sub-component boundary, regardless of whether the boundary is also a boundary between full pixels. For instance, left edge 230a of character of 214a falls on a boundary between a red pixel sub-component 228a and a green pixel sub-component 228b, which is not a boundary between full pixels. The sub-pixel precision rendering process of Figure 5 involve each pixel sub-component representing a different portion of the image data that defines character 214a, rather than entire pixels representing single portions of the image data.

While the sub-pixel precision rendering processes of Figure 5 enhance the readability and resolution of the displayed characters and documents, process of Figure 5 does not preserve compatible advance widths of characters. In particular, character 214a has a left side bearing point 216a and a right side bearing point 218a that are positioned with sub-pixel precision. Accordingly, the displayed advance width, or the distance between bearing points 216a and 218a can have a value that is not an integer multiple of the widths of the full pixel and which may be different from the displayed advanced width of character 214 of Figure 4. The cumulative affect of incompatible advance widths being generated in rendered document 201a can often have the effect of altering the formatting and length of the document. This is further illustrated at paginated document 206a, which, in this example, has a length that is greater than paginated document 206 of Figure 4. The converse process can also lead to formatting problems, when, for example, a document is generated in association with the sub-pixel precision rendering process of Figure 5 and is later displayed using a full pixel precision rendering process, such as that of Figure 4.

Figure 6 illustrates electronic document 204 having been displayed as rendered document 210b on display device 208 using a sub-pixel precision rendering process of the invention that results in the preservation of compatible advance widths of display characters. Character 214b is displayed with at least some features having sub-pixel precision as shown in region 212b and sub-region 220b of display device 208. For instance, stem 232b has a width equal to the width of four pixel sub-components or four-thirds of the width of an entire pixel.

In addition to producing the improved resolution and readability, the image rendering processes of Figure 6 result in advance widths of characters that are compatible with, or equal to, the advance widths of the characters if they had instead been displayed using a full pixel precision rendering process. For example, character 214b has a left side bearing point 216 and a right side bearing point 218 that result in the displayed advance width being the same as the displayed advance width of character 214 of Figure 4. Consequently, the overall size and spacing of the characters and the length of rendered document 210b are substantially the same as those generated using a full pixel precision rendering process of Figure 4. As a result, paginated document 206 has the same formatting in Figures 4 and 6.

The preservation of compatible advance widths according to the invention can preserve the formatting of electronic document 204 when the document is first generated in association with the full pixel precision process of Figure 4 and later displayed using the sub-pixel precision process of Figure 6. Similarly, formatting of electronic document 204 can be preserved when the electronic document is first generated in association with the sub-pixel precision process of Figure 6 and later displayed using the full pixel precision process of Figure 4. Although Figures 4 and 6 illustrate one benefit of the invention, the invention is not limited to situations where documents are successively displayed in full pixel precision and sub-pixel precision rendering processes, unless otherwise specifically indicated in individual claims. For instance, the invention extends to the electronic document generated in association with the image rendering processes of Figure 6, regardless of whether the electronic document is displayed at another time using full pixel precision process.

Details of the image rendering processes of Figure 6 are further described herein below in reference to Figures 7-12. Figure 7 is a high level block diagram representing selected functional modules of a system that is capable of forming the image processing of the invention. Image data 300 define the image, such as an electronic document, that is to be displayed. Image data 300 includes text output 302 and character data 304. Text output 302 can include, for example, the identification of the text character to be displayed. Text output 302 may be generated by a word processing application or any other desired computer process. Character data 304, in contrast, include geometric, tabular, or mathematical definitions or other definitions of the characters that are to be used to construct and display the image represented by image data 300. In other words, character data 304 represents the instructions used by the computer to render specific characters, while text output 302 indicates which of the characters are to be included in the image.

Image data 300 is received successively by scaling module 306, hinting module 308, and scan conversion module 310 to generate a bit map representation 312 of the image. Together, scaling module 306, hinting module 308, and scanning conversion module 310 result in spatially different sets of one or more samples of image data 300 being mapped to individual pixel sub-components of display device 314 rather than to entire pixels of display device 314.

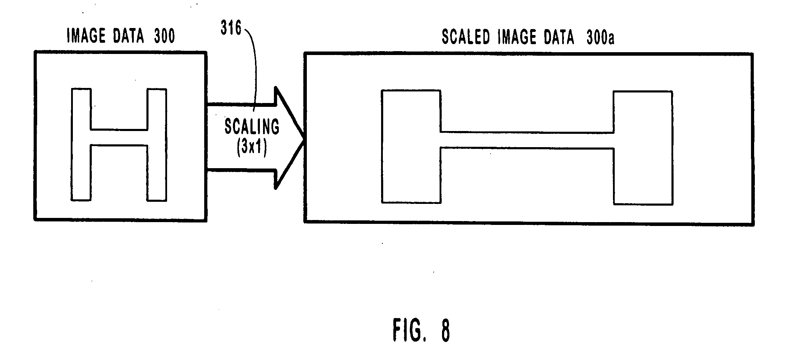

Figure 8 illustrates one example of scaling operation performed by scaling module 306 of Figure 7. In this example, image data 300 represents the letter "H." The image processing operation in Figure 7 and in the subsequent figures assume that the display device has vertical stripes of same-colored pixel sub-components. The scaling operation 316 scales image data 300 by a factor of three in the direction perpendicular to the vertical striping of the display device and by a factor of one in the direction parallel to the vertical striping, resulting in scaled image data 300a.

The scaling by a factor of three is presented by way of example only, and not by limitation. Alternatively, the scaling factor can have other values, including a value of one or any other number.

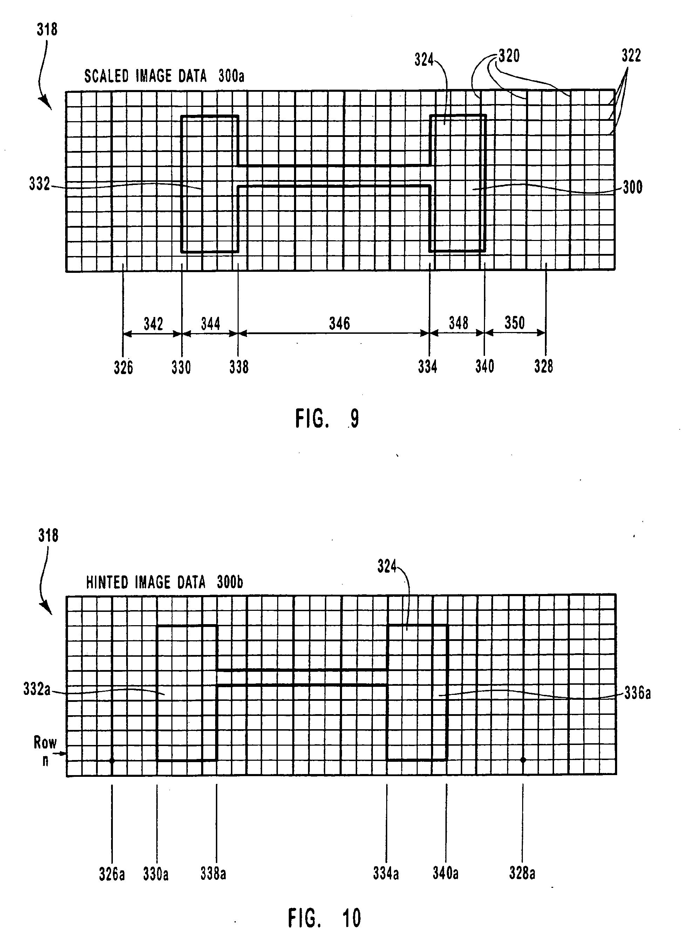

Scaled image data 300a is shown in Figure 9 having been superimposed onto a grid 318 having vertical grid boundaries 320 and horizontal grid boundaries 322 that correspond to the boundaries between full pixels on the display device. Character 324 as stored electronically prior to the hinting operation can have a left side bearing point 326 and a right side bearing point 328 being positioned with respect to grid 318 at locations that do not correspond to full pixel boundaries. In Figure 10, character 324 is fitted to grid 318 in the hinting operation performed by hinting module 308 of Figure 7 to generate hinted image data 300b. The hinting operation preserves compatible advance widths and also results in certain features of character 324 being prepared to be displayed with sub-pixel precision as will be apparent hereinafter.

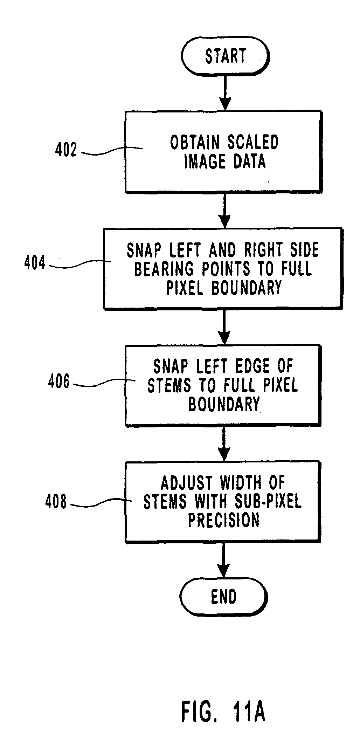

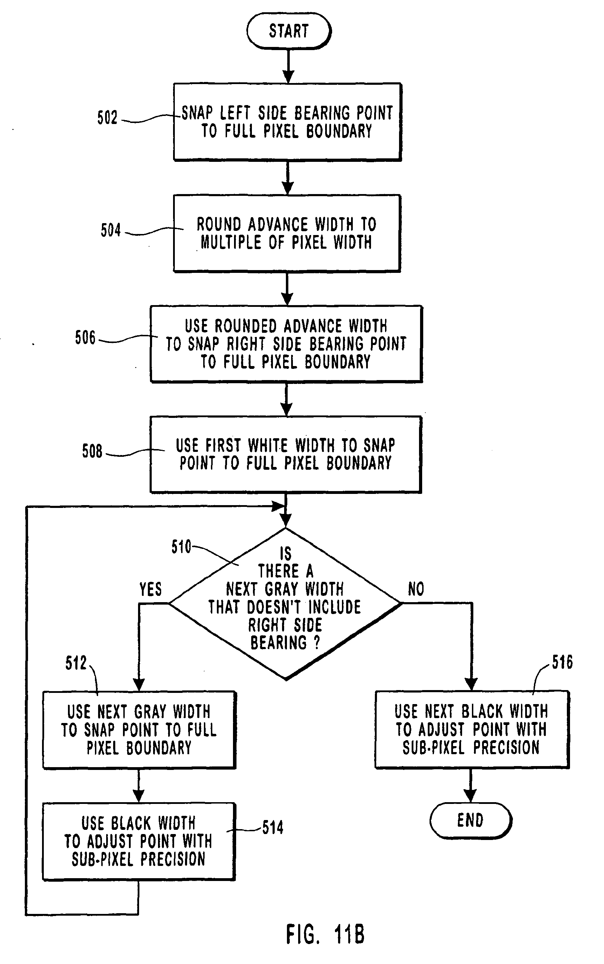

Figure 11a is a high level flow diagram showing selected steps of the hinting operation conducted by hinting module 308 of Figure 7. The steps of Figure 11a can be conducted using any available techniques whereby the topology of the character can be analyzed at run time. One specific example of techniques for analyzing the topology of the character will then be described in reference to Figure 11b.

Referring first to Figure 11a, the process includes step 402, wherein the scaled image data is obtained. In step 404, the left and right side bearing points are snapped or repositioned to full pixel boundaries. Step 404 is further illustrated by referring to the example of Figures 9 and 10. In particular, left side bearing point 326 of Figure 9 is rounded to a full pixel boundary as shown by hinted left side bearing point 326a of Figure 10. Similarly, right side bearing point 328 of Figure 9 is repositioned to a full pixel boundary as shown by hinted right side bearing point 328a of Figure 10. It is noted that snapping the left and right side bearing points to full pixel boundaries in step 404 of Figure 11a results in a compatible advance width of the hinted character that is an integer multiple of the width of the pixels.

In step 406, the left side of any stems of the character are snapped to full pixel boundaries. Step 406 can likewise be further illustrated by referring to the examples of Figures 9 and 10. In particular, left edge 330 of stem 332 is adjusted to a full pixel boundary as shown by left edge 330a of Figure 10. Similarly, left edge 334 of stem 336 is adjusted to a full pixel boundary as shown by left edge 334a of Figure 10. It is noted that snapping selected portions of the character to full pixel boundaries in steps 404 and 406 does not necessarily mean that selected features are adjusted, or rounded, to the nearest full pixel boundary. In general, these features are adjusted to full pixel boundaries in a manner that preserves the compatible advance width of the character and maintains the desired relative positioning of the various features of the character. As noted previously, one specific example of the technique for analyzing the topology of the character will be described in reference to Figure 11b, which also include steps for determining to which full pixel boundaries the selected features of the character are to be repositioned.

Referring now to Figure 11a, step 408 involves adjusting the width of any stems of the character with sub-pixel precision. Step 408 can be further understood by referring again to the example of Figure 9 and 10. Stems 332 and 336 of character 334 are adjusted with sub-pixel precision, resulting in the right edge 338 of stem 332 and the right edge 340 of stem 336 being repositioned. This is shown by hinted right edge 338a and hinted right edge 340a of Figure 10. Consequently, stem 332a and stem 336a have a width in hinted image data 300b that corresponds to the width of four pixel sub-components. It has been found that accurately rendering the widths of character stems is often more important for generating high legible characters than accurately sizing white spaces between stems, particularly in characters that have multiple stems.

Figure 11b is a flow diagram showing the steps of one embodiment of the hinting operations of the invention that analyzes the topology of the text character by referring to data structures that identify specific dimension of the text character. For instance, some font definitions include a directed acyclic graph (DAG), or information that can be used to devise a DAG, that defines white widths, black widths, and gray widths.

As used herein, the term "white widths" or "white distances" refers to a portion of the advance width of a character that corresponds to the background color of the character. White widths are often positioned between stems or between a stem and a bearing point. Example of white widths include white widths 342, 346, and 350 at Figure 9. The term "black widths" or "black distances" as used herein, refers to portions of the advance width of the character that correspond to the foreground color of the character. Black widths are often associated with the stems of characters that have stems. Example of black widths include black width 344 and 348 of Figure 9. The term "gray widths" or "gray distances" as used herein, refers to a portion of the advance width of the character that includes at least one white width and at least one black width. For example, the advance width of a character is generally a gray width. Other examples of gray widths include the combination of widths 344 and 346 and the combination of widths 348 and 350 of Figure 9. TrueType fonts developed by Microsoft Corporation of Redmond, Washington, represent one example of text characters that can be defined in part by directed acyclic graphs and have white, black, and gray widths.

Referring now to Figure 11b, step 502 involves snapping the left side bearing point to a full pixel boundary. This can involve snapping the left side bearing point of a character to the same full pixel boundary where the right side bearing point of an immediately preceding character is located or rounding the left side bearing point to the nearest full pixel boundary. Step 502 is illustrated in Figure 10 by left side bearing point 326a positioned at the full pixel boundary.

Step 504 involves rounding the advance width to an integer multiple of the pixel width. This can be performed by rounding the actual advance width of the character stored electronically to the nearest integer multiple of the width of the pixels. In step 506, the rounded advance width is used to snap the right side bearing point to a full pixel boundary. Step 506 is illustrated in Figure 10 by right side bearing point 328a having been positioned to a full pixel boundary such that the advance width of character 324 has a value equal to the width of nine full pixels. Beginning with step 508 of Figure 11b, the directed acyclic graph included in the font definition or font file is traversed.

Directed acyclic graphs in font files and examples of their traversal that can be applied to the present invention. The directed acyclic graph is one example of character data or a data structure that defines the position of selected points associated with a character and defines the relationship between the selected points in a parent/child hierarchy.

In step 508, the first white space defined in the DAG is used to snap a point to a full pixel boundary. Step 508 is further illustrated in examples of Figures 9 and 10. The first white space of step 508 is white space 342, while the point snapped to the full pixel boundary is positioned on left-edge 330 of stem 332. A white width 342 is rounded to the nearest integer multiple of the width of the pixels, thereby resulting in left edge 330 being adjusted to the position shown by left edge 330a of Figure 10.

The method of Figure 11b advances to decision block 510, where it is determined if there is a mixed gray width in the DAG that does not include the right side bearing. In the example of Figure 9, decision block 510 is answered affirmatively because the next gray width defined by the DAG is the gray width represented by the combination of widths 344 and 346, which does not include right side bearing (*i*.*e*., right side bearing 350). Returning now to Figure 11b, if decision block 510 is answered affirmatively, the method advances to step 512, in which the next gray width is used to snap a point to a full pixel boundary. In Figures 9 and 10, the point associated with step 512 is positioned at left edge 334 of stem 336, since that point is at the distant side of the next gray width (*i*.*e*., combination of widths 344 and 346). The point at edge 344 is snapped to a full pixel boundary as shown by edge 334a of Figure 10.

In step 514 of Figure 11b, the black width (*i.e.,* the black width included in the next gray width of step 512) is used to adjust a point width sub-pixel precision. Referring to Figure 9, the black width of step 514 in this example is black width 344 and the point to be adjusted is at right edge 338 of stem 332. Since that point is at the distant end of black width 344, the point at edge 338 is adjusted with sub-pixel precision to be located as shown at 338a of Figure 10. Consequently, stem 332a has a width that can be a non-integer multiple of the width of the full pixels. In this example, stem 332a has a width equal to four pixel sub-components or four-thirds the width of a full pixel. In this manner, selected features (e.g., character stems) will be displayed with sub-pixel precision.

The method of Figure 11b returns to decision block 510 after step 514. The next gray width of decision block 510 is measured from the end point of the previous gray width or the previous white width. In the example of Figure 9, the next gray width is the gray width consisting of widths 348 and 350, which does include right side bearing (i.e., width 350). Referring to Figure 11b, decision block 510 is answered in the negative and the method proceeds to step 516, in which the next black width is used to adjust a point with sub-pixel precision. In the example in Figure 9, the next black width of step 516 is black width 348, while the point to be adjusted is at right edge 340 of stem 336. The point at right edge 340 is adjusted with sub-pixel precision as shown by right edge 340a of Figure 10.

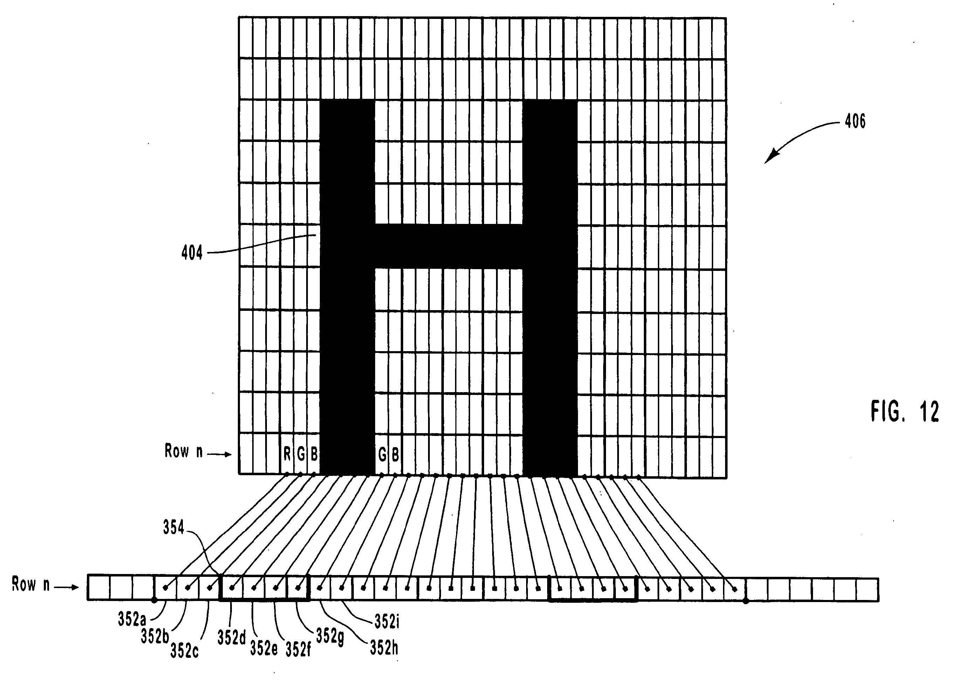

Any other features of the character can then be repositioned if needed with respect to the key points described above in reference to Figure 11b. Figure 12 illustrates a portion of a scan conversion operation conducted by scan conversion module 310 of Figure 7. Row N of Figure 12 corresponds to row N of grid 318 of Figure 10. The scan conversion operation of Figure 12 involves mapping spatially different sets of one or more samples of the hinted image data to pixel sub-components of the display device or to generate bit map representation 312 of the image.

In the example of Figure 12, each of the spatially different sets of one or more samples includes exactly one sample. Alternatively, any number of samples can be mapped to the pixel sub-components. In general, spatially different sets of one or more samples are mapped to each pixel sub-component. The process of mapping sets of samples to pixel sub-components can be understood as a filtering process. The filters correspond to the position and number of samples included in the sets of samples mapped to the individual pixel sub-components. Filters corresponding to different colors of pixel sub-components can have the same size or different sizes. The samples included in the filters can be mutually exclusive (e.g., each samples is passed through only one filter) or the filters can overlap (e.g., some samples are included in more than one filter). In general, the filters used in the scan conversion process can be adapted to produce desirable color effects on the displayed images.

The samples 352 of row N are mapped to pixel sub-components of row N' in order to generate the luminous intensity values to be applied to the pixel sub-components for displaying the character. Samples 352a-c are mapped, respectively, to red, green, and blue pixel sub-components of row N'. Because samples 352a-c fall outside the outline 354 shown in Figure 12, the red, green, and blue pixel sub-components to which they are mapped are given intensity values that correspond to the background color of the character. Samples 352d-g are mapped to red, green, blue, and red pixel sub-components. Because samples 352d-g fall within outline 354, the corresponding red, green, blue, and red pixel sub-components are given luminous intensity values that correspond to the foreground color of character 324. Similarly, samples 352h and 352i are mapped to green and blue pixel sub-components, which are given luminous intensity values corresponding to the background color of character 354.

In this manner, character 324 is prepared to be displayed on the display device with sub-pixel precision, at least with respect to the stems of the character. Each of the pixel sub-component represents a different region of the image data rather than entire pixel representing single portions of the image data.

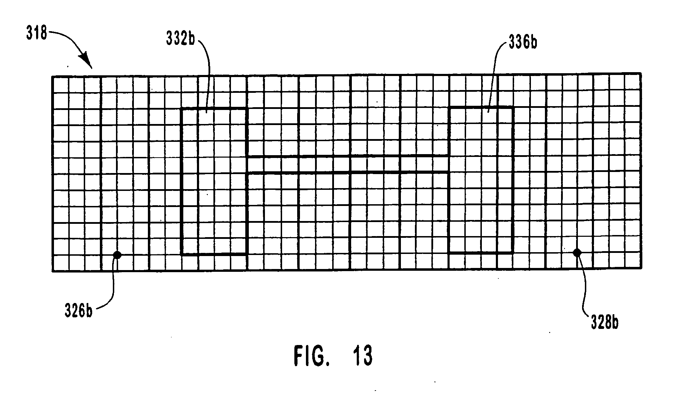

Figure 13 is presented to contrast the hinted image data 300b of Figure 10 that results both in sub-pixel precision for at least some features of the character and compatible advance widths with a hinting process that results in pixel sub-precision, while not preserving compatible advance widths. The hinting process of Figure 13 results in stems 332b and 336b having a width that has a sub-pixel precision value. Moreover, left side bearing point 326b and right side bearing point 328b are positioned on grid 318 with sub-pixel precision. However, the displayed advance width, or the distance between left side bearing point 326b and right side bearing point 328b has a value that is a non-integer multiple of the width of the full pixels and is not a compatible advance width. The hinting process of Figure 13 is one that is used, for instance, in the image rendering process of Figure 5.

The present invention may be embodied in other specific forms without departing from its essential characteristics as recited in the appended claims.

## Claims

1. A method of displaying a character (214) on a display device (208) such that a selected feature of the character has a width rendered with pixel sub-component precision, while maintaining an advance width (144) of the character having a value that is an integer multiple of the width of the pixels, the method for use in a processing device (200) associated with the display device, wherein the display device has a plurality of pixels (222, 224) each having a plurality of pixel sub-components (222a - 222c, 224a - 224c) and wherein each pixel sub-component within a particular pixel has a color that is different from the other pixel sub-components of the particular pixel, the method comprising:
obtaining existing image data (300) representing a character having a selected feature (232) by accessing the image data from a document (204) that has been created in association with a full pixel precision rendering process, the character having a coarse advance width that is associated with the character when the character is displayed using the full pixel precision rendering process in which the widths of character features of the character are integer multiples of the width of the pixels, wherein the full pixel precision rendering process results in sub-components of a pixel representing a same single region of the image;
based on the image data, displaying the character on the display device using a pixel sub-component precision rendering process, wherein the pixel sub-component precision rendering process results in sub-components of a pixel representing different regions of the image, wherein:
the selected feature is rendered with pixel sub-component precision, comprising adjusting (408) a width of the selected feature of the character to pixel sub-component precision such that, depending on the image data representing the character, said adjusted width of the selected feature can be different from the width of the selected feature that would be displayed if the selected feature were to be displayed using the full pixel precision rendering process and can be a non-integer multiple of the width of the pixels; and wherein
the advance width of the displayed character has a value that is an integer multiple of the width of the pixels and is equal to the coarse advance width, such that the advance width of the displayed character obtained using the pixel sub-component precision rendering process is the same as the coarse advance width that would be obtained if the character were to be rendered using the full pixel precision rendering process.

2. The method as recited in claim 1, further comprising:
displaying the document on the display device using the pixel sub-component precision rendering process such that the formatting of the displayed document (210) is preserved, the displaying of the document including the displaying of the character.

3. The method as recited in claim 1, wherein the Image data is included in an electronic document that can be displayed on the display device, the method further comprising:
displaying the document on another display device using a full pixel precision rendering process, wherein the formatting of the displayed electronic document (210) as it has been displayed using the pixel sub-component precision rendering process is preserved.

4. The method as recited in one of the claims 1 to 3, wherein the displaying of the character further comprises:
mapping spatially different sets of one or more samples of the image data to each of the plurality of pixel sub-components of a particular pixel.

5. The method as recited in claim 4, wherein at least two of the spatially different sets have at least one sample in common, such that said at least one sample is mapped to at least two of the plurality of pixel sub-components of the particular pixel.

6. The method as recited in one of the claims 1 to 5, wherein the displaying of the character comprises:
during runtime, analyzing the topology of the character to identify selected points of the character that are to be fitted to a grid defined by the pixels; and
positioning the selected points to grid points of the grid such that the width of the selected feature of the character is rendered with pixel sub-component precision and the displayed advance width of the character obtained using the pixel sub-component precision rendering process is the same as the coarse advance width that would be obtained if the character were to be rendered using the full pixel precision rendering process and is an integer multiple of the width of the pixels.

7. The method as recited in claim 1, wherein the selected feature of the character comprises a stem of the character.

8. The method as recited in claim 7, further comprising:
retrieving the Image data from a storage volume (202) associated with the processing device (200), the image data identifying key points of the character and a parent/child hierarchy of the key points, the key points including a left side bearing point (216), a point on a left edge (230) of the stem, and a point on a right edge of the stem;
using the parent/child hierarchy:
positioning the left side bearing point (216) to a first grid point on a grid defined by the pixels, the first grid point corresponding to a boundary between pixels;
positioning the point on the left edge to a second grid point on the grid, the second grid point corresponding to a boundary between pixels; and
positioning the point on the right edge to a third grid point on the grid, the third grid point being located at a distance from the second grid point, the distance having pixel sub-component precision.

9. The method as recited in claim 7, wherein the displaying of the character comprises:
positioning a left side bearing point (216) of the image data to a first point on a grid defined by the pixels of the display device, the first point corresponding to a first boundary between pixels;
positioning a point on a left edge of the stem to a second point on the grid, the second point corresponding to a second boundary between pixels; and
positioning a point on a right edge of the stem to a third point on the grid, the third point being selected with sub-pixel precision.

10. The method as recited in claim 2, wherein the formatting represents an overall formatting and length of the displayed document (210) when displayed using the full pixel precision rendering process, the displayed document (210) including character data that represents a plurality of characters, wherein the adjusting of a width comprises:
adjusting a feature of at least some of the characters with pixel sub-component precision.

11. The method as recited in claim 10, wherein the document has a first displayed length when the document is displayed using the full pixel precision rendering process, the displaying of the document resulting in the document having a second displayed length that is equal to the first displayed length.

12. The method as recited in claim 10, wherein the displaying of the document comprises, for at least some of the plurality of characters:
positioning a left side bearing point (216) of the character data associated with the particular character to a first point on a grid defined by the pixels of the display device, the first point corresponding to a first boundary between pixels;
positioning a point on a left edge of a selected feature of the particular character to a second point on the grid, the second point corresponding to a second boundary between pixels; and
positioning a point on a right edge of the selected feature to a third point on the grid, the third point being selected with pixel sub-component precision.

13. The method as recited in claim 12, wherein the selected feature comprises a stem of the particular character.

14. The method of claim 1, wherein the selected feature comprises a stem of the character, the method further comprising:
positioning a selected point located on a first edge of the stem, a left side bearing point (216) of the character, and a right side bearing point (218) of the character at grid points on the grid that correspond to boundaries between pixels on the display device; and
positioning a point on a second edge of the stem on the grid such that a width of the stem has a value having pixel sub-component precision, the second edge being opposite the first edge.

15. The method as recited in claim 14, further comprising:
displaying the character on the display device wherein the advance width of the character is the width which extends between the left side bearing point (216) and the right side bearing point (218) and is an integer multiple of a width of the pixels and wherein a width of the stem between the first edge and the second edge is displayed with pixel sub-component precision.

16. The method as recited in claim 14 or 15, wherein the positioning of a selected point located on a first edge of the stem, a left side bearing point (216) of the character, and a right side bearing point (218) of the character at grid points comprises:
positioning the left side bearing point to a first grid point that corresponds to a specified boundary between pixels;
determining the coarse advance width of the character that would be generated if the character were to be displayed using a full pixel precision rendering process; and
positioning the right side bearing point to a second grid point such that the left side bearing point and the right side bearing point are separated by a distance equal to the coarse advance width.

17. The method as recited in claim 16, wherein the displaying of the character on the display device is performed such that the formatting of the displayed document is preserved, the displaying of the document including the displaying of the character.

18. The method as recited in one of the claims 14 to 16, wherein the first edge of the stem is the left edge of the stem and the second edge of the stem is the right edge of the stem.

19. The method as recited in one of the claims 14 to 16, further comprising:
analyzing the topology of the character at runtime to identify the selected point located on the first edge of the stem.

20. The method as recited in one of the claims 14 to 16, further comprising:
analyzing a directed acyclic graph that defines the selected point on the first edge of the stem, the left side bearing point (216), the right side bearing point (218), and the point on the second edge of the stem.

21. A computer-readable medium comprising computer-executable instructions for performing all the steps of the method according to any one of the claims 1 to 20, when run on a Computer.

22. A computer system comprising:
a processing unit;
a display device including a plurality of pixels, each of the plurality of pixels including a plurality of separately controllable pixel sub-components; and
a computer program product including a computer-readable medium according to claim 21.

23. The computer system as recited in claim 22, wherein each of the plurality of pixels includes exactly three separately controllable pixel sub-components, each of a different color.

24. The computer system as recited in claim 23, wherein the plurality of pixel sub-components are arranged on the display device to form vertical stripes of same-colored pixel sub-components.

## Patentansprüche

1. Verfahren zum Anzeigen eines Zeichens (214) auf einer Anzeigevorrichtung (208), so dass ein gewähltes Merkmal des Zeichens eine Breite hat, die mit Pixelteilkomponenten-Präzision dargestellt wird, während eine Dickte (144) des Zeichens beibehalten wird, die einen Wert hat, der ein ganzzahliges Vielfaches der Breite der Pixel ist, wobei das Verfahren für die Verwendung in einer Verarbeitungsvorrichtung (200) bestimmt ist, die der Anzeigevorrichtung zugeordnet ist, wobei die Anzeigevorrichtung eine Vielzahl von Pixeln (222, 224) hat, die jeweils eine Vielzahl von Pixelteilkomponenten (222a-222c, 224a-224c) haben und jede Pixelteilkomponente innerhalb eines einzelnen Pixels eine Farbe hat, die sich von den anderen Pixelteilkomponenten des einzelnen Pixels unterscheidet, wobei das Verfahren umfasst:
Beziehen bestehender Bilddaten (300), die ein Zeichen repräsentieren, das ein gewähltes Merkmal (232) hat, durch Zugreifen auf die Bilddaten aus einem Dokument (204), das in Verbindung mit einem Vollpixel-Präzisionsdarstellungsvorgang erzeugt wurde, wobei das Zeichen eine grobe Dickte hat, die dem Zeichen zugeordnet ist, wenn das Zeichen mit Hilfe des Vollpixel-Präzisionsdarstellungsvorgangs angezeigt wird, bei dem die Breiten von Zeichenmerkmalen des Zeichens ganzzahlige Vielfache der Breite der Pixel sind, wobei der Vollpixel-Präzisionsdarstellungsvorgang dazu führt, dass Teilkomponenten eines Pixels einen gleichen einzelnen Bereich des Bildes repräsentieren; und
basierend auf den Bilddaten, Anzeigen des Zeichens auf der Anzeigevorrichtung mit Hilfe eines Pixelteilkomponenten-Präzisionsdarstellungsvorgangs, wobei der Pixelteilkomponenten-Präzisionsdarstellungsvorgang dazu führt, dass Teilkomponenten eines Pixels unterschiedliche Bereiche des Bildes repräsentieren, wobei:
das gewählte Merkmal mit Pixelteilkomponenten-Präzision dargestellt wird, umfassend das Einstellen (408) einer Breite des gewählten Merkmals des Zeichens auf Pixelteilkomponenten-Präzision derart, dass in Abhängigkeit der Bilddaten, die das Zeichen repräsentieren, sich die eingestellte Breite des gewählten Merkmals von der Breite des gewählten Merkmals unterscheiden kann, die angezeigt würde, wenn das gewählte Merkmal mit Hilfe des Vollpixel-Präzisionsdarstellungsvorgangs anzuzeigen wäre, und ein nicht ganzzahliges Vielfaches der Breite der Pixel sein kann; und
die Dickte des angezeigten Zeichens einen Wert hat, der ein ganzzahliges Vielfaches der Breite der Pixel ist und gleich der groben Dickte ist, so dass die Dickte des angezeigten Zeichens, die man mit Hilfe des Pixelteilkomponenten-Präzisionsdarstellungsvorgangs erhält, dieselbe ist, wie die grobe Dickte, die man erhalten würde, wenn das Zeichen mit Hilfe des Vollpixel-Präzisionsdarstellungsvorgangs darzustellen wäre.

2. Verfahren nach Anspruch 1, weiterhin umfassend:
Anzeigen des Dokumentes auf der Anzeigevorrichtung mit Hilfe des Pixelteilkomponenten-Präzisionsdarstellungsvorgangs, so dass die Formatierung des angezeigten Dokumentes (210) erhalten bleibt, wobei das Anzeigen des Dokumentes das Anzeigen des Zeichens umfasst.

3. Verfahren nach Anspruch 1, bei dem die Bilddaten in einem elektronischen Dokument enthalten sind, das auf der Anzeigevorrichtung angezeigt werden kann, wobei das Verfahren weiterhin umfasst:
Anzeigen des Dokumentes auf einer weiteren Anzeigevorrichtung mit Hilfe eines Vollpixel-Präzisionsdarstellungsvorgangs, wobei die Formatierung des angezeigten elektronischen Dokumentes (210), wie es mit Hilfe des Pixelteilkomponenten-Präzisionsdarstellungsvorgangs angezeigt wurde, erhalten bleibt.

4. Verfahren nach einem der Ansprüche 1 bis 3, bei dem das Anzeigen des Zeichens weiterhin umfasst:
Abbilden räumlich unterschiedlicher Sätze wenigstens einer Abtastung der Bilddaten auf jede der Vielzahl von Pixelteilkomponenten eines einzelnen Pixels.

5. Verfahren nach Anspruch 4, bei dem wenigstens zwei der räumlich unterschiedlichen Sätze wenigstens eine Abtastung gemein haben, so dass wenigstens eine Abtastung auf wenigstens zwei der Vielzahl von Teilpixelkomponenten des einzelnen Pixels abgebildet wird.

6. Verfahren nach einem der Ansprüche 1 bis 5, bei dem das Anzeigen des Zeichens umfasst:
Analysieren der Topologie des Zeichens während der Laufzeit, um gewählte Punkte des Zeichens zu identifizieren, die mit einem Raster abzustimmen sind, das durch die Pixel definiert ist; und
Positionieren der gewählten Punkte auf den Rasterpunkten des Rasters, so dass die Breite des gewählten Merkmals des Zeichens mit Pixelteilkomponenten-Präzision dargestellt wird und die angezeigte Dickte des Zeichens, die man mit Hilfe des Teilpixelkomponenten-Präzisionsdarstellungsvorgangs erhält, dieselbe ist, wie die grobe Dickte, die man erhalten würde, wenn das Zeichen mit Hilfe des Vollpixel-Präzisionsdarstellungsvorgangs darzustellen wären, und ein ganzzahliges Vielfaches der Breite der Pixel ist.

7. Verfahren nach Anspruch 1, bei dem das gewählte Merkmal des Zeichens einen Stamm des Zeichens enthält.

8. Verfahren nach Anspruch 7, weiterhin umfassend:
Abrufen der Bilddaten von einem Speicherdatenträger (202), der der Verarbeitungsvorrichtung (200) zugeordnet ist, wobei die Bilddaten Schlüsselpunkte des Zeichens und eine Eltern-/Kind-Hierarchie der Schlüsselpunkte identifizieren und die Schlüsselpunkte einen linksseitigen Ankerpunkt (216), einen Punkt auf einer linken Kante (230) des Stamms sowie einen Punkt auf einer rechten Kante des Stamms umfassen;
Verwenden der Eltern-/Kind-Hierarchie:
Positionieren des linksseitigen Ankerpunktes (216) an einem ersten Rasterpunkt auf einem Raster, das durch die Pixel definiert ist, wobei der erste Rasterpunkt einer Grenze zwischen Pixeln entspricht;
Positionieren des Punktes auf der linken Kante an einem zweiten Rasterpunkt auf dem Raster, wobei der zweite Rasterpunkt einer Grenze zwischen Pixeln entspricht; und
Positionieren des Punktes auf der rechten Kante an einem dritten Rasterpunkt auf dem Raster, wobei der dritte Rasterpunkt in einem Abstand von dem zweiten Rasterpunkt angeordnet ist und der Abstand Pixelteilkomponenten-Präzision hat.

9. Verfahren nach Anspruch 7, bei dem das Anzeigen des Zeichens umfasst:
Positionieren eines linksseitigen Ankerpunktes (216) der Bilddaten an einem ersten Punkt auf einem Raster, das durch die Pixel der Anzeigevorrichtung definiert ist, wobei der erste Punkt einer ersten Grenze zwischen Pixeln entspricht;
Positionieren eines Punktes auf einer linken Kante des Stammes an einem zweiten Punkt auf dem Raster, wobei der zweite Punkt einer zweiten Grenze zwischen Pixeln entspricht; und
Positionieren eines Punktes auf einer rechten Kante des Stamms an einem dritten Punkt auf dem Raster, wobei der dritte Punkt mit Teilpixelpräzision gewählt wird.

10. Verfahren nach Anspruch 2, bei dem die Formatierung eine gesamte Formatierung und Länge des angezeigten Dokumentes (210) repräsentiert, wenn eine Anzeige mit Hilfe des Vollpixel-Präzisionsdarstellungsvorgangs erfolgt, wobei das angezeigte Dokument (210) Zeichendaten enthält, die eine Vielzahl von Zeichen repräsentieren und das Einstellen einer Breite umfasst:
Einstellen eines Merkmals wenigstens einiger der Zeichen mit Pixelteilkomponenten-Präzision.

11. Verfahren nach Anspruch 10, bei dem das Dokument eine erste angezeigte Länge hat, wenn das Dokument mit Hilfe des Vollpixel-Präzisionsdarstellungsvorgangs angezeigt wird, wobei das Anzeigen des Dokuments dazu führt, dass das Dokument eine zweite angezeigte Länge hat, die gleich der ersten angezeigten Länge ist.

12. Verfahren nach Anspruch 10, bei dem das Anzeigen des Dokumentes für wenigstens einige aus der Vielzahl von Zeichen umfasst:
Positionieren eines linksseitigen Ankerpunktes (216) der Zeichendaten, die dem einzelnen Zeichen zugeordnet sind, an einem ersten Punkt auf einem Raster, das durch die Pixel der Anzeigevorrichtung definiert ist, wobei der erste Punkt einer ersten Grenze zwischen Pixeln entspricht;
Positionieren eines Punktes auf einer linken Kante eines gewählten Merkmals des einzelnen Zeichens an einem zweiten Punkt auf dem Raster, wobei der zweite Punkt einer zweiten Grenze zwischen Pixeln entspricht; und
Positionieren eines Punktes auf einer rechten Kante des gewählten Merkmals an einem dritten Punkt auf dem Raster, wobei der dritte Punkt mit Pixelteilkomponenten-Präzision gewählt wird.

13. Verfahren nach Anspruch 12, bei dem das gewählte Merkmal einen Stamm des einzelnen Zeichens enthält.

14. Verfahren nach Anspruch 1, bei dem das gewählte Merkmal einen Stamm des Zeichens enthält, wobei das Verfahren weiterhin umfasst:
Positionieren eines gewählten Punktes, der sich auf einer ersten Kante des Stamms befindet, eines linksseitigen Ankerpunktes (216) des Zeichens und eines rechtsseitigen Ankerpunktes (218) des Zeichens an Rasterpunkten auf dem Raster, die Grenzen zwischen Pixeln auf der Anzeigevorrichtung entsprechen; und
Positionieren eines Punktes auf einer zweiten Kante des Stamms auf dem Raster, so dass eine Breite des Stamms einen Wert aufweist, der Pixelteilkomponenten-Präzision hat, wobei die zweite Kante der ersten Kante gegenüberliegt.

15. Verfahren nach Anspruch 14, weiterhin umfassend:
Anzeigen des Zeichens auf der Anzeigevorrichtung, wobei die Dickte des Zeichens die Breite ist, die sich zwischen dem linksseitigen Ankerpunkt (216) und dem rechtsseitigen Ankerpunkt (218) erstreckt, und ein ganzzahliges Vielfaches einer Breite der Pixel ist und eine Breite des Stamms zwischen der ersten Kante und der zweiten Kante mit Pixelteilkomponenten-Präzision angezeigt wird.

16. Verfahren nach Anspruch 14 oder 15, bei dem das Positionieren eines gewählten Punktes, der sich auf einer ersten Kante des Stamms befindet, eines linksseitigen Ankerpunktes (216) des Zeichens und eines rechtsseitigen Ankerpunktes (218) des Zeichens an Rasterpunkten umfasst:
Positionieren des linksseitigen Ankerpunktes an einem ersten Rasterpunkt, der einer festgelegten Grenze zwischen Pixeln entspricht;
Bestimmen der groben Dickte des Zeichens, die erzeugt würde, wenn das Zeichen mit Hilfe des Vollpixel-Präzisionsdarstellungsvorgangs anzuzeigen wäre; und
Positionieren des rechtsseitigen Ankerpunktes an einem zweiten Rasterpunkt, so dass der linksseitige Ankerpunkt und der rechtsseitige Ankerpunkt um einen Abstand getrennt sind, der gleich der groben Dickte ist.

17. Verfahren nach Anspruch 16, bei dem das Anzeigen des Zeichens auf der Anzeigevorrichtung derart ausgeführt wird, dass die Formatierung des angezeigten Dokumentes erhalten bleibt, wobei das Anzeigen des Dokumentes das Anzeigen des Zeichens beinhaltet.

18. Verfahren nach einem der Ansprüche 14 bis 16, bei dem die erste Kante des Stamms die linke Kante des Stamms ist und die zweite Kante des Stamms die rechte Kante des Stamms ist.

19. Verfahren nach einem der Ansprüche 14 bis 16, weiterhin umfassend:
Analysieren der Topologie des Zeichens bei Laufzeit, um den gewählten Punkt zu identifizieren, der sich auf der ersten Kante des Stamms befindet.

20. Verfahren nach einem der Ansprüche 14 bis 16, weiterhin umfassend:
Analysieren eines gerichteten azyklischen Graphen, der den gewählten Punkt auf der ersten Kante des Stamms, den linksseitigen Ankerpunkt (216), den rechtsseitigen Ankerpunkt (218) und den Punkt auf der zweiten Kante des Stamms definiert.

21. Computerlesbares Medium, enthaltend von einem Computer ausführbare Anweisungen zum Ausführen sämtlicher Schritte des Verfahrens nach einem der Ansprüche 1 bis 20, wenn es auf einem Computer läuft.

22. Computersystem, enthaltend:
eine Verarbeitungseinheit;
eine Anzeigevorrichtung, die eine Vielzahl von Pixeln enthält, wobei jedes der Vielzahl von Pixeln eine Vielzahl getrennt steuerbarer Teilpixelkomponenten enthält; und
ein Computerprogrammerzeugnis, das ein computerlesbares Medium nach Anspruch 21 enthält.

23. Computersystem nach Anspruch 22, bei dem jedes der Vielzahl von Pixeln exakt drei separat steuerbare Pixelteilkomponenten einer jeweils anderen Farbe enthält.

24. Computersystem nach Anspruch 23, bei dem die Vielzahl der Pixelteilkomponenten auf der Anzeigevorrichtung angeordnet wird, um vertikale Streifen gleichfarbiger Pixelteilkomponenten auszubilden.

## Revendications

1. Procédé pour afficher un caractère (214) sur un dispositif d'affichage (208) de sorte qu'une caractéristique sélectionnée du caractère présente une largeur rendue selon une précision de sous-composante de pixel, tout en maintenant une largeur de l'avance (144) du caractère présentant une valeur qui est un multiple de nombre entier de la largeur des pixels, le procédé étant à utiliser dans un dispositif de traitement (200) associé au dispositif d'affichage, dans lequel le dispositif d'affichage comprend une pluralité de pixels (222, 224) comprenant chacun une pluralité de sous-composantes de pixel (222a à 222c, 224a à 224c) et dans lequel chaque sous-composante de pixel dans un pixel particulier présente une couleur qui est différente de celle des autres sous-composantes de pixel du pixel particulier, le procédé comprenant :
l'obtention de données d'image existantes (300) représentant un caractère présentant une caractéristique sélectionnée (232) par l'accès des données d'image à partir d'un document (204) qui a été créé en association avec un procédé de rendu selon une précision de pixel entier, le caractère présentant une largeur de l'avance grossière qui est associée au caractère lorsque celui-ci est affiché à l'aide du procédé de rendu selon une précision de pixel entier dans lequel les largeurs des caractéristiques de caractère du caractère sont des multiples de nombre entier de la largeur des pixels, le procédé de rendu selon une précision de pixel entier résultant en ce que des sous-composantes de pixel représentent une même région unique de l'image ;
sur la base des données d'image, l'affichage du caractère sur le dispositif d'affichage à l'aide d'un procédé de rendu selon une précision de sous-composante de pixel, ledit procédé résultant en ce que des sous-composantes d'un pixel représentent des régions différentes de l'image, dans lequel :
la caractéristique sélectionnée est rendue selon une précision de sous-composante de pixel, comprenant l'ajustement (408) d'une largeur de la caractéristique sélectionnée du caractère jusqu'à une l'obtention d'une précision de sous-composante de pixel de sorte que, en fonction des données d'image représentant le caractère, ladite largeur ajustée de la caractéristique sélectionnée puisse être différente de la largeur de la caractéristique sélectionnée qui serait affichée si la caractéristique sélectionnée devait être affichée à l'aide du procédé de rendu selon une précision de pixel entier et puisse être un multiple d'un nombre non entier de la largeur des pixels ; et dans lequel la largeur de l'avance du caractère affiché présente une valeur qui est un multiple de nombre entier de la largeur des pixels et est égale à la largeur de l'avance grossière, de sorte que la largeur de l'avance du caractère affiché obtenue à l'aide du procédé de rendu selon une précision de sous-composante de pixel soit la même que la largeur de l'avance grossière qui serait obtenue si le caractère devait être rendu à l'aide du procédé de rendu selon une précision de pixel entier.

2. Procédé conformément à la revendication 1 comprenant en outre :
l'affichage du document sur le dispositif d'affichage à l'aide du procédé de rendu selon une précision de sous-composante de pixel de sorte que le formatage du document affiché (210) soit préservé, l'affichage du document comprenant l'affichage du caractère.

3. Procédé conformément à la revendication 1, dans lequel les données d'image sont comprises dans un document électronique qui peut être affiché sur le dispositif d'affichage, le procédé comprenant en outre :
l'affichage du document sur un autre dispositif d'affichage à l'aide du procédé de rendu selon une précision de pixel entier, dans lequel le formatage du document électronique affiché (210) tel qu'il a été affiché à l'aide du procédé de rendu selon une précision de sous-composante de pixel est préservé.

4. Procédé conformément à l'une des revendications 1 à 3, dans lequel l'affichage du caractère comprend en outre :
la mise en correspondance d'ensembles spatialement différents d'un ou plusieurs échantillon(s) des données d'image avec chaque sous-composante parmi la pluralité de sous-composantes de pixel d'un pixel particulier.

5. Procédé conformément à la revendication 4, dans lequel au moins deux des ensembles spatialement différents comportent au moins un échantillon en commun, de sorte que le ou les échantillon(s) soi(en)t mis en correspondance avec au moins deux sous-composantes parmi la pluralité de sous-composantes de pixel du pixel particulier.

6. Procédé conformément à l'une des revendications 1 à 5, dans lequel l'affichage du caractère comprend :
pendant le temps d'exécution, l'analyse de la topologie du caractère afin d'identifier des points sélectionnés du caractère qui doivent être placés sur une grille définie par les pixels ; et
le positionnement des points sélectionnés sur les points de grille de la grille de sorte que la largeur de la caractéristique sélectionnée du caractère soit rendue selon une précision de sous-composante de pixel et la largeur de l'avance affichée du caractère obtenue à l'aide du procédé de rendu selon une précision de sous-composante de pixel soit la même que la largeur de l'avance grossière qui serait obtenue si le caractère devait être rendu à l'aide du procédé de rendu selon une précision de pixel entier et soit un multiple de nombre entier de la largeur des pixels.

7. Procédé conformément à la revendication 1, dans lequel la caractéristique sélectionnée du caractère comprend un jambage du caractère.

8. Procédé conformément à la revendication 7 comprenant en outre :
l'extraction des données d'image d'un volume de stockage (202) associé au dispositif de traitement (200), les données d'image identifiant des points clés du caractère et une hiérarchie parent/enfant des points clés, les points clés comprenant un point d'appui côté gauche (216), un point situé sur un contour gauche (230) du jambage, et un point situé sur un contour droit du jambage ;
l'utilisation de la hiérarchie parent/enfant ;
le positionnement du point d'appui côté gauche (216) sur un premier point de grille d'une grille définie par les pixels, le premier point de grille correspondant à une frontière entre des pixels ;
le positionnement du point situé sur le contour gauche sur un deuxième point de grille de la grille, le deuxième point de grille correspondant à une frontière entre des pixels ; et
le positionnement du point situé sur le contour droit sur un troisième point de grille de la grille, le troisième point de grille étant situé à une certaine distance par rapport au deuxième point de grille, la distance présentant une précision de sous-composante de pixel.

9. Procédé conformément à la revendication 7, dans lequel l'affichage du caractère comprend :
le positionnement d'un point d'appui côté gauche (216) des données d'image sur un premier point d'une grille définie par les pixels du dispositif d'affichage, le premier point correspondant à une première frontière entre des pixels ;
le positionnement d'un point situé sur un contour gauche du jambage sur un deuxième point de la grille, le deuxième point correspondant à une seconde frontière entre des pixels ; et
le positionnement d'un point situé sur un contour droit du jambage sur un troisième point de la grille, le troisième point étant sélectionné selon une précision de sous-pixel.

10. Procédé conformément à la revendication 2, dans lequel le formatage représente, dans son ensemble, un formatage et une longueur du document affiché (210) lorsqu'il est affiché à l'aide du procédé de rendu selon une précision de pixel entier, le document affiché (210) comprenant des données de caractère qui représentent une pluralité de caractères, dans lequel l'ajustement d'une largeur comprend :
l'ajustement d'une caractéristique d'au moins certains des caractères selon une précision de sous-composante de pixel.

11. Procédé conformément à la revendication 10, dans lequel le document comprend une première longueur affichée lorsque le document est affiché à l'aide du procédé de rendu selon une précision de pixel entier, l'affichage du document résultant en ce que le document comprend une seconde longueur affichée qui est égale à la première longueur affichée.

12. Procédé conformément à la revendication 10, dans lequel l'affichage du document comprend, pour au moins certains caractères parmi la pluralité de caractères :
le positionnement d'un point d'appui côté gauche (216) des données de caractère associées au caractère particulier sur un premier point d'une grille définie par les pixels du dispositif d'affichage, le premier point correspondant à une première frontière entre des pixels ;
le positionnement d'un point situé sur un contour gauche d'une caractéristique sélectionnée du caractère particulier sur un deuxième point de la grille, le deuxième point correspondant à une seconde frontière entre des pixels ; et
le positionnement d'un point situé sur un contour droit de la caractéristique sélectionnée sur un troisième point de la grille, le troisième point étant sélectionné selon une précision de sous-composante de pixel.

13. Procédé conformément à la revendication 12, dans lequel la caractéristique sélectionnée comprend un jambage du caractère particulier.

14. Procédé conformément à la revendication 1, dans lequel la caractéristique sélectionnée comprend un jambage du caractère, procédé comprenant en outre :
le positionnement d'un point sélectionné situé sur un premier contour du jambage, d'un point d'appui côté gauche (216) du caractère, et d'un point d'appui côté droit (218) du caractère au niveau de points de grille de la grille qui correspondent à des frontières entre des pixels sur le dispositif d'affichage ; et
le positionnement d'un point situé sur un second contour du jambage sur la grille de sorte qu'une largeur du jambage présente une valeur selon une précision de sous-composante de pixel, le second contour étant en regard du premier contour.

15. Procédé conformément à la revendication 14 comprenant en outre :
l'affichage du caractère sur le dispositif d'affichage, la largeur de l'avance du caractère étant la largeur qui s'étend entre le point d'appui côté gauche (216) et le point d'appui côté droit (218) et étant un multiple de nombre entier d'une largeur des pixels et une largeur du jambage entre le premier contour et le second contour étant affichée selon une précision de sous-composante de pixel.

16. Procédé conformément à la revendication 14 ou 15, dans lequel le positionnement d'un point sélectionné situé sur un premier contour du jambage, d'un point d'appui côté gauche (216) du caractère, et d'un point d'appui côté droit (218) du caractère au niveau de points de grille comprend :
le positionnement du point d'appui côté gauche sur un premier point de grille qui correspond à une frontière spécifiée entre des pixels ;
la détermination de la largeur de l'avance grossière du caractère qui serait générée si le caractère devait être affiché à l'aide d'un procédé de rendu selon une précision de pixel entier ; et
le positionnement du point d'appui côté droit sur un second point de grille de sorte que le point d'appui côté gauche et le point d'appui côté droit soient séparés d'une distance égale à la largeur de l'avance grossière.

17. Procédé conformément à la revendication 16, dans lequel l'affichage du caractère sur le dispositif d'affichage est effectué de sorte que le formatage du document affiché soit préservé, l'affichage du document comprenant l'affichage du caractère.

18. Procédé conformément à l'une des revendications 14 à 16, dans lequel le premier contour du jambage est le contour gauche du jambage et le second contour du jambage est le contour droit du jambage.

19. Procédé conformément à l'une quelconque des revendications 14 à 16 comprenant en outre :
l'analyse de la topologie du caractère au cours du temps d'exécution afin d'identifier le point sélectionné situé sur le premier contour du jambage.

20. Procédé conformément à l'une des revendications 14 à 16 comprenant en outre :
l'analyse d'un graphe acyclique orienté qui définit le point sélectionné sur le premier contour du jambage, le point d'appui côté gauche (216) ; le point d'appui côté droit (218), et le point situé sur le second contour du jambage.

21. Support lisible par ordinateur comprenant des instructions exécutables par ordinateur pour exécuter toutes les étapes du procédé conformément à l'une quelconque des revendications 1 à 20, lorsqu'elles sont exécutées sur un ordinateur.

22. Système informatique comprenant :
une unité de traitement ;
un dispositif d'affichage comprenant une pluralité de pixels, chaque pixel parmi la pluralité de pixels comprenant une pluralité de sous-composantes de pixel pouvant être commandées séparément ; et
un produit-programme informatique comprenant un support lisible par ordinateur conformément à la revendication 21.

23. Système informatique conformément à la revendication 22, dans lequel chaque pixel parmi la pluralité de pixels comprend exactement trois sous-composantes de pixel pouvant être commandées séparément, chacune ayant une couleur différente.

24. Système informatique conformément à la revendication 23, dans lequel la pluralité de sous-composantes de pixel est disposée sur le dispositif d'affichage afin de former des bandes verticales de sous-composantes de pixel de même couleur.
